# EUROPEAN PATENT SPECIFICATION

(11) **EP 3 392 587 B1**
(45) Date of publication and mention of the grant of the patent: **17.06.2020**
(21) Application number: 18167837.6
(22) Date of filing: 17.04.2018
(51) Int. Cl.: F27B 9/38, C21D 9/00, F27D 3/00, F27D 3/06, F27D 3/12, B65G 15/12

(54) **LOADING SYSTEM FOR CONTINUOUS OVENS PARTICULARLY FOR THE TREATMENT OF METALLIC ITEMS AND CONTINUOUS OVEN COMPRISING SUCH A SYSTEM**
BESCHICKUNGSSYSTEM FÜR DURCHLAUFÖFEN, INSBESONDERE ZUR BEHANDLUNG VON METALLISCHEN GEGENSTÄNDEN UND DURCHLAUFOFEN MIT SOLCH EINEM SYSTEM
SYSTÈME DE CHARGEMENT POUR FOURS CONTINUS, EN PARTICULIER POUR LE TRAITEMENT D'ARTICLES MÉTALLIQUES ET FOUR CONTINU COMPRENANT UN TEL SYSTÈME

(30) Priority: 18.04.2017 IT 201700042301
(43) Date of publication of application: 24.10.2018
(73) Proprietor: LM Industry S.R.L., 36056 Tezze sul Brenta (VI) (IT)
(72) Inventor: LANDO, WALTER, 36050 BELVEDERE DI TEZZE SUL BRENTA (VI) (IT); LANDO, DENIS, 36028 ROSSANO VENETO (VI) (IT); ZURLO, LUCA, 35018 SAN MARTINO DI LUPARI (PD) (IT)
(74) Representative: Marchioro, Paolo

(56) References cited:
- WO-A1-99/19681
- DE-B- 1 208 753
- JP-A- 2007 211 281

## Description

The invention concerns a loading system for continuous ovens particularly for the treatment of metallic items.

Another object of the invention is a continuous oven comprising such a loading system.

Currently, continuous ovens, for example of the box type, heated electrically or by gas, suitable for tempering, stretching, annealing, ageing, passivation, 'top-coat', solvent evaporation, paint drying, and other similar treatments, are known and increasingly common.

Such ovens are particularly used for the treatment of jewellery, screws and bolts, pins, electric motors, springs and items that have undergone a surface coating treatment, for example with water-based products or with solvent.

Such continuous ovens are generally loaded through a loading conveyor belt, on which a certain amount of items to be treated has been tipped from a basket or drawer or from another conveyor belt, said belt advancing above, and in the same direction as, a box conveyor, at a different advancing speed with respect to the box conveyor.

A box conveyor generally comprises a series of boxes constrained to one or more motorised advancing and recirculation chains for such boxes; when the boxes have their opening facing upwards they are filled with items to be treated, they advance carrying out a journey inside one or more heated chambers, to then rotate downwards, unloading the treated items, and carry out the journey in the opposite direction, with opening facing downwards, below the conveyor.

For the loading of each box, the conveyor belt is arranged with an unloading end thereof above the box conveyor, which one after the other are progressively filled as they pass below the unloading end of the conveyor belt. Such a loading system, although normally used, has some limitations.

A major limitation consists of the distribution of the items to be treated inside the boxes of the box conveyor; indeed, generally such items are unloaded onto the conveyor belt directly from a basket or from another transportation carrier, so that the distribution of such items on the same conveyor belt can be approximate and result in subsequent imbalanced filling of the boxes between one box and the next.

Moreover, even where loaded in substantially equivalent quantities in all of the boxes, the items are often positioned inside a box in an inconvenient manner in view of the heating treatment or drying that they must undergo, i.e. such items to be treated are collected dishomogeneously, possibly also overlapped or at least partially overlapped, so that part of them can be treated insufficiently with respect to what is expected. The patent application JP 2007 211281 relates to a loading system for feeding a continuous heat treatment facility, having the purpose of aligning items with elongated shape, which comprises a first conveyor belt and a second conveyor belt. To improve the distribution of the items on the second conveyor belt, the system comprises a vibrating feeder positioned under the unloading end of the first conveyor belt, - and a hopper positioned under the unloading end of the vibrating feeder, this hopper being positioned above the second conveyor belt. This system is useful just with elongated items, such screws or similar, and not with all kind of items neither smaller, such as bolts, springs, pins, nor bigger, such as electric motor, jewels and others.

The task of the present invention is to provide a loading system for continuous ovens particularly for the treatment of metallic items capable of avoiding the quoted drawbacks and limitations of the prior art.

In particular, a purpose of the invention is to provide a loading system that allows a more balanced and precise distribution of the items to be treated on a conveyor of items inside an oven for the treatment of such items.

Another purpose of the invention is to provide a loading system capable of tipping the items to be treated onto a conveyor of an oven, improving the distribution thereof with respect to known loading systems.

A further purpose of the invention is to provide a loading system also able to be associated with ovens of the type known *per se* and already operative. Furthermore, a purpose of the invention is to provide a continuous oven comprising such a loading system.

The task as well as the aforementioned purposes are accomplished by a loading system according to claim 1, as well as by a continuous oven according to claim 10.

Further characteristics of the loading system according to claim 1 are described in the dependent claims.

The task and the aforementioned purposes, together with the advantages that will be mentioned hereinafter, are highlighted by the description of an embodiment of the invention, which is given, for indicating but not limiting purposes, with reference to the attached tables of drawings, where:
- figure 1 represents a perspective view of a loading system according to the invention associated with a continuous oven also according to the invention;
- figure 2 represents a perspective view from below of a conveyor belt of the loading system according to the invention;
- figure 3 represents a side section view of the conveyor belt of figure 2;
- figure 4 represents another conveyor belt of the loading system according to the invention;
- figure 5 represents a perspective view of an operating step of the loading system according to the invention;
- figure 6 represents a perspective view of another operating step of the loading system according to the invention;
- figure 7 represents a perspective view of a further operating step of the loading system according to the invention.

With reference to the quoted figures, a loading system for continuous ovens particularly for the treatment of metallic items according to the invention is wholly indicated with reference numeral **10.**

Such a loading system **10** comprises:
- a first conveyor belt **11** for advancing items to be treated, indicated as an example with reference numeral **12,** in a first direction **X** towards an unloading end **13** of the same first conveyor belt **11**;
- means **14** for the alternate translation of said first conveyor belt **11** in the first direction **X**;
- a second conveyor belt **15** for advancing items to be treated in a second direction **Y** transversal with respect to the first direction **X**; such a second conveyor belt **15** is positioned below the unloading end **13** of the first conveyor belt **11** in an operative step of the same first conveyor belt **11**;
- a mobile anti-falling retaining wall **16**, positioned transversally to the second conveyor belt **15** and close to an unloading end **17** of such a second conveyor belt **15**;
- means **18** for the movement of the mobile anti-falling retaining wall **16** between a lowered configuration, for holding items to be treated **12** on said second conveyor belt **15**, and a raised configuration adapted for allowing the passage of the items to be treated towards the unloading end **17** of said second conveyor belt **15**;
- moving means **19** for the items to be treated **12**, configured to transit below the unloading end **17** of the second conveyor belt **15.**

In particular, as can be clearly seen from the figures, the mobile anti-falling retaining wall **16** is positioned above the second conveyor belt **15** in an area between the unloading end **13** of the first conveyor belt **11** and the unloading end **17** of the second conveyor belt **15.**

In the present non-limiting example of the invention itself, the second direction **Y** is perpendicular to the first direction **X.**

Both of the directions are substantially parallel to the ground.

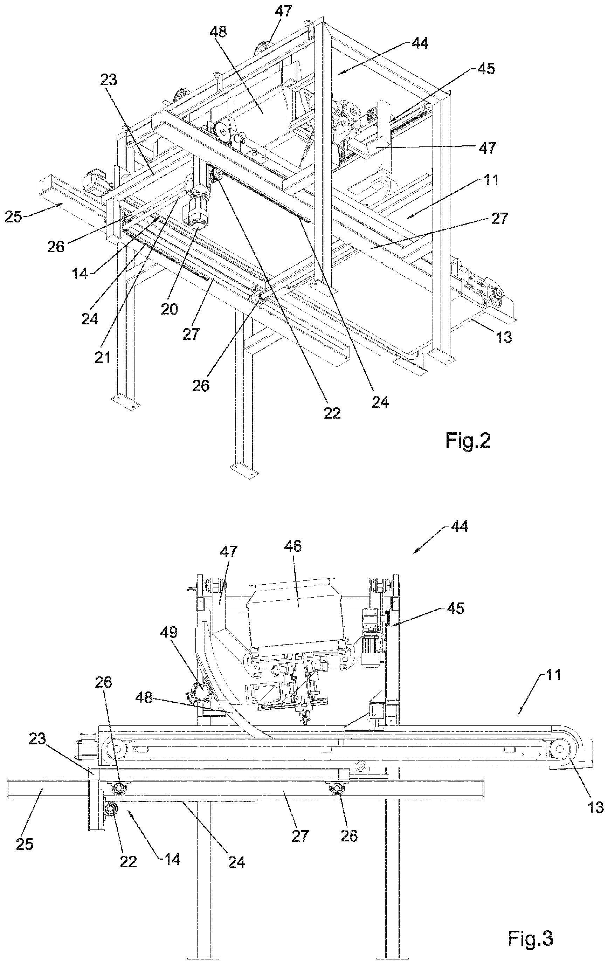

The means **14** for the alternate translation of the first conveyor belt **11** in the first direction **X** comprise, as clearly represented in figure 2, a motor **20** intended to actuate a drive shaft **21** carrying at least one driving gear wheel **22,** for example two opposite driving gear wheels **22.**

Motor **20** and drive shaft **21,** with the driving gear wheels **22,** are supported by a mobile frame **23** on which the first conveyor belt **11** is mounted.

The driving gear wheels **22** each engage with a corresponding rack **24.**

Each rack **24** is fixed to a fixed frame **25,** on which the mobile frame **23** moves by means of two pairs of wheels **26** arranged to slide inside corresponding longitudinal guide profiles **27** fixedly connected to the fixed frame **25.**

Thanks to such alternate translation means **14,** the first conveyor belt **11** moves with its unloading end **13** above the second conveyor belt **15** so as to unload the items to be treated distributing them on the entire width of the second conveyor belt **15.**

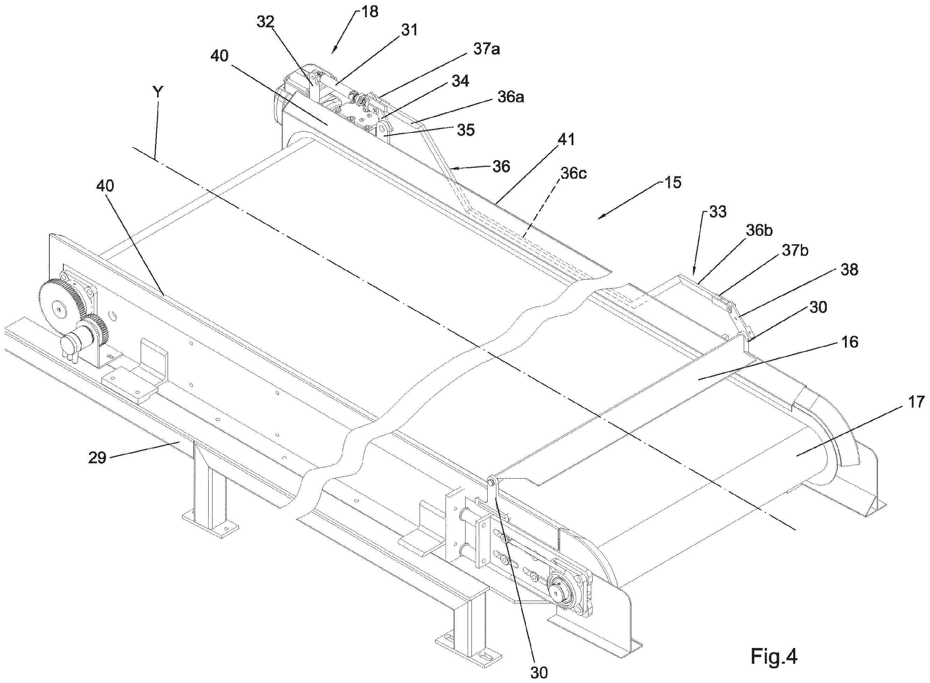

The second conveyor belt **15,** clearly visible in figure 4, is supported by a fixed frame **29.**

The mobile anti-falling retaining wall **16,** positioned transversally to the second conveyor belt **15** and close to an unloading end **17** of such a second conveyor belt **15,** consists of a metallic plate pivoted, according to an axis transversal to the second direction **Y,** to two opposite brackets **30** fixedly connected to the fixed frame **29** carrying the second conveyor belt **15.**

The means **18** for the movement of the mobile anti-falling retaining wall **16** comprise, in the present example, a linear actuator, for example a pneumatic cylinder **31,** constrained by a first end thereof to a bracket **32** fixed to the fixed frame **29,** and at the opposite end to a linkage **33** configured to act on the mobile anti-falling retaining wall **16.**

In the present example, the linkage **33** comprises a first lever **34,** said first lever **34** being pivoted:
- at one end to a bracket **35,** fixed to the fixed frame **29,**
- centrally to the linear actuator, i.e. to the pneumatic cylinder **31,**
- and at the opposite end to a shaped rod **36.**

Such a shaped rod **36** is rotatably constrained at a first end thereof **37a** to the first lever **34** and at the opposite second end **37b** to a second lever **38;** such a second lever **38** is fixed to a pivot also fixedly connected to the mobile anti-falling retaining wall **16**; such a pivot, for the sake of simplicity not illustrated, is hinged to one of the two brackets **30.**

The second conveyor belt **15** has side edges **40,** with upper edge **41.**

The shaped rod **36** has two end segments **36a** and **36b** positioned to operate at a height that exceeds the height of the upper edge **41** of the side containment edges **40** of the second conveyor belt **15,** and a central segment **36c,** positioned at a lower height than the edge **41.**

Such a special configuration of the shaped rod **36** makes it possible to position the linear actuator, i.e. the pneumatic cylinder **31,** in an area of the second conveyor belt **15** that is outside of a continuous oven **50** in which part of the second conveyor belt **15** is contained, and to actuate the mobile anti-falling retaining wall **16,** which is in the part of the second conveyor belt **15** that is inside the continuous oven **50,** without the rod resulting in the need for a dedicated opening to pass from the outside to the inside of the continuous oven **50,** but rather so as to exploit the spaces already existing for the positioning of the second conveyor belt **15** and in particular the spaces for the containment edges **40** of the second conveyor belt **15.**

The movement linkage of the mobile anti-falling retaining wall **16** should be considered to be able to be of another, similar and equivalent type.

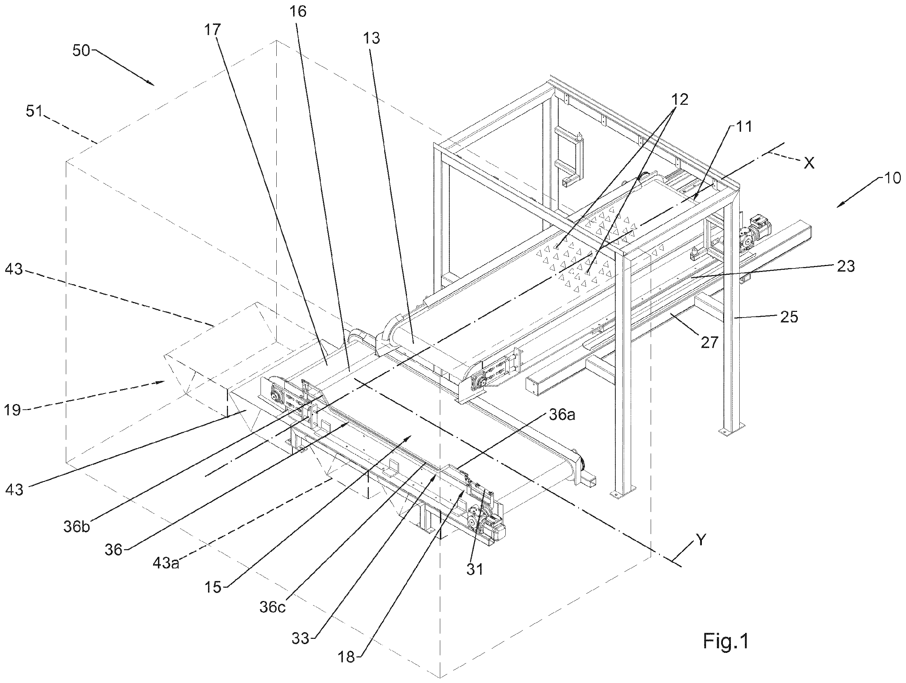

The moving means **19** for the items to be treated **12,** configured to transit below the unloading end **17** of the second conveyor belt **15,** consist, in the present example, of a box conveyor, of a *per se* known type, where the boxes of such a box conveyor are indicated in figure 1 with reference numeral **43.** The loading system **10** can also comprise means **44** for loading the first conveyor belt **11,** clearly visible in figures 2 and 3.

Such loading means **44** of the first conveyor belt **11** consist, for example, of a tipping group **45** for a basket **46** carrying a load of items to be treated **12.**

The tipping group **45** is supported by a motorised trolley **47,** arranged to slide on the fixed frame **25** in the transversal direction with respect to the first advancing direction **X** of the first conveyor belt **11.**

The loading means **44** of the first conveyor belt **11** also comprise a chute for reducing the fall **48,** intended to accompany the descent of the items to be treated from the basket **46** to the first conveyor belt **11.**

The chute **48** is connected to a motor vibrator **49** adapted for ensuring the correct and complete descent of the items to be treated **12** without them adhering to the chute **48** itself.

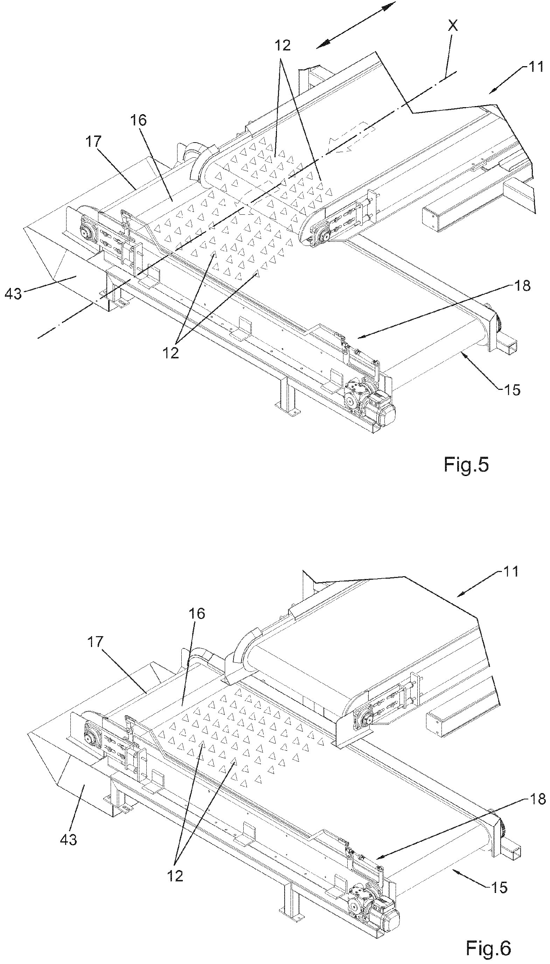

The operation of the loading system **10** according to the invention is schematised in figures 5, 6 and 7 and is described hereinafter.

A first box **43** is positioned below the unloading end **17** of the second conveyor belt **15.**

The items to be treated **12,** descended in a disorganised manner on the first conveyor belt **11** for example from the basket **46,** are unloaded on the second conveyor belt **15,** stationary, translating the first conveyor belt **11** itself forwards and backwards in the first direction **X,** so as to distribute the items to be treated **12** on the entire width of the second conveyor belt **15.**

The advancing and reversing speed of the first conveyor belt **11** is such as to give the least possible inertia to the items to be treated **12** unloaded, so that they rebound as little as possible in the descent on the second conveyor belt **15.**

In such an unloading step from the first conveyor belt **11** to the second conveyor belt **15** the mobile anti-falling retaining wall **16** is lowered, i.e. arranged with configuration substantially perpendicular to the second conveyor belt **15,** as can clearly be seen in figures 5 and 6, so as to prevent the items to be treated **12,** which for whatever reason move in an unexpected and undesired manner towards the unloading end **17** of the second conveyor belt **15,** from falling directly in the box **43.**

Figure 6 represents an intermediate step in which a series of items to be treated **12** is distributed on the entire width of the second conveyor belt **15.**

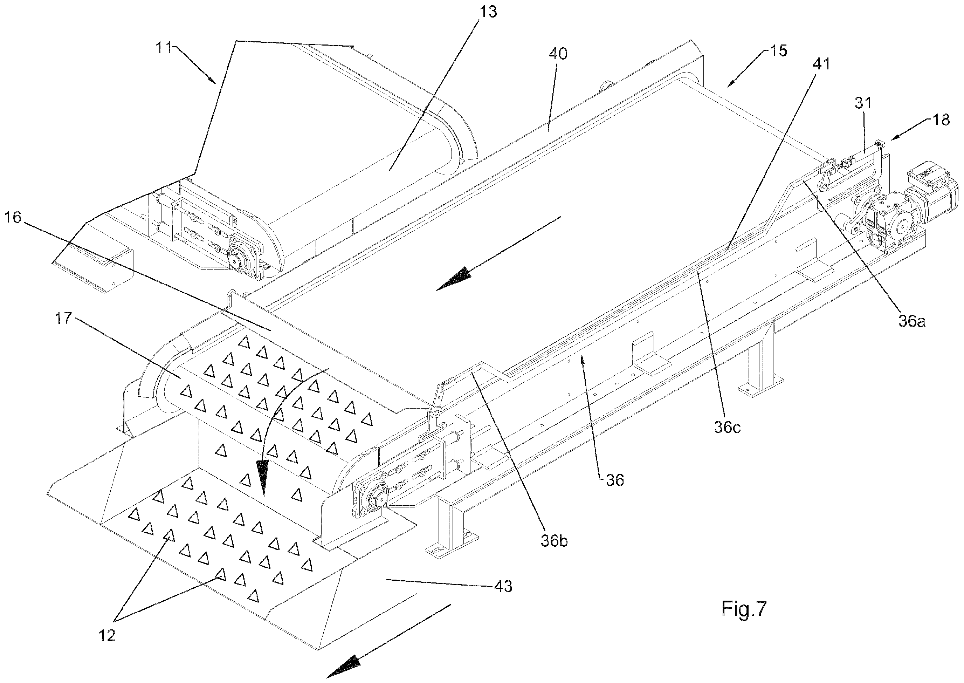

A subsequent unloading step from the second conveyor belt **15** to a box **43** foresees the actuation of the linear actuator, i.e. the pneumatic cylinder **31,** with actuation of the linkage **33** and traction of the shaped rod **36,** the movement of which results in the rotation upwards of the mobile anti-falling retaining wall **16,** away from the second conveyor belt **15,** according to figure 7.

Once the mobile anti-falling retaining wall **16** has been raised, the second conveyor belt **15** is actuated so that the items to be treated **12** arranged on it fall through the unloading end **17** into the underlying box **43.**

For better distribution of the items to be treated **12** inside the box **43,** the advancing of the second conveyor belt **15** and the movement of the box **43** take place simultaneously with speed and position synchronised by an encoder, so that the items to be treated **12** are distributed in the box **43** without overlapping or in any case overlapping as little as possible, so as to improve the efficiency of the treatment inside the oven **50.**

The box **43,** once its loading is complete, is moved by the conveyor towards the subsequent areas of the oven **50** and, at the same time, a subsequent box **43a** is taken below the unloading end **17** of the second conveyor belt **15** for a new loading operation.

The boxes **43** are dragged, with a chain system, thus of the *per se* known type, through the various stages of the oven.

The boxes **43** are made of perforated sheet to make the air circulate better between the items to be treated **12** collected in each of them.

Another object of the invention is a continuous oven **50** comprising a loading system **10.**

Such a continuous oven **50** comprises at least one heating chamber **51** and moving means **19** for items to be treated inside said at least one heating chamber.

The special feature of the continuous oven **50** is the fact that it comprises a loading system **10** as described above.

In particular, the moving means **19** comprise a box conveyor **43** for the items to be treated **12.**

The moving means **19** should be considered to also be able to be others, of a similar and equivalent type.

In practice, it has been noted how the invention achieves the task and the intended purposes.

In particular, the invention provides a loading system that improves the heat exchange with the items to be treated and under treatment, being configured to distribute the items to be treated as uniformly as possible inside each box of the box conveyor of the oven, carrying out the loading with two belts arranged perpendicular to one another, instead of, according to the prior art, carrying out a simple frontal loading with a single belt.

Moreover, the invention has also provided a loading system also able to be associated with ovens of the *per se* known type and already operative. Moreover, the invention has provided a continuous oven comprising such a loading system.

In practice, the components and the materials used, provided that they are compatible with the specific use, as well as the contingent shapes and sizes, can be whatever according to the requirements and the state of the art. Where the characteristics and the techniques mentioned in any claim are followed by reference signs, such reference signs should be deemed to be applied only for the purpose of increasing the intelligibility of the claims and consequently such reference signs do not have any limiting effect on the interpretation of each element identified as an example by such reference signs.

## Claims

1. Loading system (10) for continuous ovens particularly for the treatment of metallic items, comprising:
- a first conveyor belt (11) for advancing items to be treated in a first direction (X) towards an unloading end (13) of the same first conveyor belt (11);
- a second conveyor belt (15) for advancing items to be treated in a second direction (Y) transversal with respect to said first direction (X), said second conveyor belt (15) being positioned below said unloading end (13) of said first conveyor belt (11) in an operative step of the same first conveyor belt (11);
**characterized in that** it comprises
- means (14) for the alternate translation of said first conveyor belt (11) in said first direction (X);
- a mobile anti-falling retaining wall (16), positioned transversally to said second conveyor belt (15) and close to an unloading end (17) of said second conveyor belt (15);
- means (18) for the movement of said mobile anti-falling retaining wall (16) between a lowered configuration, for holding items to be treated on said second conveyor belt (15), and a raised configuration adapted for allowing the passage of said items to be treated towards said unloading end (17) of said second conveyor belt (15);
- moving means (19) for said items to be treated, configured to transit below said unloading end (17) of said second conveyor belt (15).

2. Loading system according to claim 1, **characterised in that** said second direction (Y) is perpendicular to the first direction (X).

3. Loading system according to one or more of the previous claims, **characterised in that** said means (14) for the alternate translation of the first conveyor belt (11) in the first direction (X) comprise a motor (20) intended to actuate a drive shaft (21) carrying at least one driving gear wheel (22), motor (20) and drive shaft (21), with said driving gear wheels (22), being supported by a mobile frame (23) on which said first conveyor belt (11) is mounted, said at least one driving gear wheel (22) engaging with a corresponding rack (24), said rack (24) being fixed to a fixed frame (25), on which the mobile frame (23) moves by means of two pairs of wheels (26) arranged to slide inside corresponding longitudinal guide profiles (27) fixedly connected to the fixed frame (25).

4. Loading system according to one or more of the previous claims, **characterised in that** said second conveyor belt (15) is supported by a fixed frame (29).

5. Loading system according to one or more of the previous claims, **characterised in that** said mobile anti-falling retaining wall (16) consists of a metallic plate pivoted, according to an axis transversal to the second direction (Y), to two opposite brackets (30) fixedly connected to said fixed frame (29) supporting said second conveyor belt (15).

6. Loading system according to one or more of the previous claims, **characterised in that** said means (18) for the movement of the mobile anti-falling retaining wall (16) comprise a linear actuator constrained by a first end thereof to a bracket (32) fixed to said fixed frame (29), and at the opposite end to a linkage (33) configured to act on the mobile anti-falling retaining wall (16).

7. Loading system according to one or more of the previous claims, **characterised in that** said linkage (33) comprises a first lever (34), said first lever (34) being pivoted at one end to a bracket (35), fixed to said fixed frame (29), centrally to said linear actuator, and at the opposite end to a shaped rod (36).

8. Loading system according to one or more of the previous claims, **characterised in that** said shaped rod (36) is rotatably constrained at a first end thereof (37a) to the first lever (34) and at the opposite second end (37b) to a second lever (38), said second lever (38) being fixed to a pivot also fixedly connected to the mobile anti-falling retaining wall (16), said pivot being hinged to one of the two brackets (30).

9. Loading system according to one or more of the previous claims, **characterised in that** said moving means (19) for the items to be treated, configured to transit below the unloading end (17) of the second conveyor belt (15), consist of a box conveyor (43).

10. Continuous oven (50), of the type comprising at least one heating chamber (51) and moving means (19) for items to be treated inside said at least one heating chamber, which is **characterised in that** it comprises a loading system (10) according to one or more of the previous claims.

## Patentansprüche

1. Beladungssystem (10) für Durchlauföfen, insbesondere für die Behandlung von Metallgegenständen, umfassend:
- ein erstes Förderband (11) zum Vorwärtsbewegen von zu behandelnden Gegenständen in eine erste Richtung (X) zu einem Entladungsende (13) des ersten Förderbandes (11);
- ein zweites Förderband (15) zum Vorwärtsbewegen von zu behandelnden Gegenständen in eine zweite, quer zu der ersten Richtung (X) liegende Richtung (Y), wobei das zweite Förderband (15) unter dem Entladungsende (13) des ersten Förderbandes (11) in einem Betriebsschritt des ersten Förderbandes (11) positioniert ist;
**dadurch gekennzeichnet, dass** es Folgendes umfasst:
- Mittel (14) für die hin- und hergehende Translation des ersten Förderbandes (11) in die erste Richtung (X);
- eine bewegliche fallsichere Stützwand (16), die quer zu dem zweiten Förderband (15) und nahe dem Entladungsende (17) des zweiten Förderbandes (15) positioniert ist;
- Mittel (18) zur Bewegung der beweglichen fallsicheren Stützwand (16) zwischen einer abgesenkten Anordnung zum Halten von zu behandelnden Gegenständen auf dem zweiten Förderband (15) und einer angehobenen Anordnung, die geeignet ist, den Übergang der zu behandelnden Gegenstände zum Entladungsende (17) des zweiten Förderbandes (15) zu erlauben;
- Bewegungsmittel (19) für die zu behandelnden Gegenstände, die ausgebildet sind, um unterhalb des Entladungsendes (17) des zweiten Förderbandes (15) verfahren zu werden.

2. Beladungssystem nach Anspruch 1, **dadurch gekennzeichnet, dass** die zweite Richtung (Y) senkrecht zu der ersten Richtung (X) liegt.

3. Beladungssystem nach einem oder mehreren der vorstehenden Ansprüche, **dadurch gekennzeichnet, dass** die Mittel (14) zur hin- und hergehenden Translation des ersten Förderbandes (11) in die erste Richtung (X) einen Motor (20) umfassen, der zu dazu bestimmt ist, eine Antriebswelle (21) zu betätigen, die wenigstens ein Antriebszahnrad (22) trägt, wobei Motor (20) und Antriebswelle (21) mit den Antriebszahnrädern (22) von einem beweglichen Rahmen (23) gestützt sind, auf dem das erste Förderband (11) eingebaut ist, wobei das wenigstens eine Antriebszahnrad (22) mit einer entsprechenden Zahnstange (24) in Eingriff steht, wobei die Zahnstange (24) an einem festen Rahmen (25) befestigt ist, auf dem der bewegliche Rahmen (23) sich mittels zweier Räderpaare (26) bewegt, die angeordnet sind, um innerhalb entsprechender längslaufender Führungsprofile (27) zu gleiten, die mit dem festen Rahmen (25) fest verbunden sind.

4. Beladungssystem nach einem oder mehreren der vorstehenden Ansprüche, **dadurch gekennzeichnet, dass** das zweite Förderband (15) von einem festen Rahmen (29) gestützt wird.

5. Beladungssystem nach einem oder mehreren der vorstehenden Ansprüche, **dadurch gekennzeichnet, dass** die bewegliche fallsichere Stützwand (16) aus einer Metallplatte besteht, die entlang einer Querachse zu der zweiten Richtung (Y) an zwei gegenüberliegenden Halterungen (30) schwenkbar gelagert ist, die mit dem festen Rahmen (29) fest verbunden sind, der das zweite Förderband (15) stützt.

6. Beladungssystem nach einem oder mehreren der vorstehenden Ansprüche, **dadurch gekennzeichnet, dass** die Mittel (18) für die Bewegung der beweglichen fallsicheren Stützwand (16) einen linearen Aktuator umfassen, der mit einem ersten Ende desselben an einer Halterung (32) festgelegt ist, die an dem festen Rahmen (29) befestigt ist, und mit dem gegenüberliegenden Ende an einem Gestänge (33), das ausgebildet ist, um auf die bewegliche fallsichere Stützwand (16) zu wirken.

7. Beladungssystem nach einem oder mehreren der vorstehenden Ansprüche, **dadurch gekennzeichnet, dass** das Gestänge (33) einen ersten Hebel (34) umfasst, wobei der erste Hebel (34) mit einem Ende an einer an dem festen Rahmen (29), mittig zu dem linearen Aktuator, befestigten Halterung (35) und mit dem gegenüberliegenden Ende an einer Formstange (36) drehbar gelagert ist.

8. Beladungssystem nach einem oder mehreren der vorstehenden Ansprüche, **dadurch gekennzeichnet, dass** die Formstange (36) mit einem ersten Ende (37a) derselben an einem ersten Hebel (34) und mit dem gegenüberliegenden Ende (37b) an einem zweiten Hebel (38) drehbar festgelegt ist, wobei der zweite Hebel (38) an einem Drehzapfen befestigt ist, der ebenfalls mit der beweglichen fallsicheren Stützwand (16) fest verbunden ist, wobei der Drehzapfen an einer der beiden Halterungen (30) angelenkt ist.

9. Beladungssystem nach einem oder mehreren der vorstehenden Ansprüche, **dadurch gekennzeichnet, dass** die Bewegungsmittel (19) für die zu behandelnden Gegenstände, die ausgebildet sind, um unterhalb des Entladungsendes (17) des zweiten Förderbandes (15) zu verfahren zu werden, aus einem Kastenförderer (43) bestehen.

10. Durchlaufofen (50) des Typs mit wenigstens einer Heizkammer (51) und Bewegungsmitteln (19) für zu behandelnde Gegenstände im Inneren der wenigstens einen Heizkammer, der **dadurch gekennzeichnet ist, dass** er ein Beladungssystem (10) nach einem oder mehreren der vorstehenden Ansprüche umfasst.

## Revendications

1. Système de chargement (10) pour fours continus, en particulier pour le traitement d'articles métalliques, comprenant:
- une première bande transporteuse (11) pour faire avancer des articles à traiter dans une première direction (X) vers une extrémité de déchargement (13) de la même première bande transporteuse (11);
- une deuxième bande transporteuse (15) pour faire avancer des articles à traiter dans une deuxième direction (Y) transversale par rapport à ladite première direction (X), ladite deuxième bande transporteuse (15) étant positionnée en dessous de ladite extrémité de déchargement (13) de ladite première bande transporteuse (11) dans une étape opérationnelle de la même première bande transporteuse (11);
**caractérisé en ce qu'**il comprend
- des moyens (14) pour la translation alternative de ladite première bande transporteuse (11) dans ladite première direction (X);
- une paroi de soutènement anti-chute mobile (16), positionnée transversalement à ladite deuxième bande transporteuse (15) et en proximité d'une extrémité de déchargement (17) de ladite deuxième bande transporteuse (15);
- des moyens (18) pour le déplacement de ladite paroi de soutènement anti-chute mobile (16) entre une configuration abaissée, pour soutenir des articles à traiter sur ladite deuxième bande transporteuse (15), et une configuration surélevée adaptée pour permettre le passage desdits articles à traiter vers ladite extrémité de déchargement (17) de ladite deuxième bande transporteuse (15);
- des moyens de déplacement (19) pour lesdits articles à traiter, configurés pour passer en dessous de ladite extrémité de déchargement (17) de ladite deuxième bande transporteuse (15).

2. Système de chargement selon la revendication 1, **caractérisé en ce que** ladite deuxième direction (Y) est perpendiculaire à la première direction (X).

3. Système de chargement selon l'une ou plusieurs des revendications précédentes, **caractérisé en ce que** lesdits moyens (14) pour la translation alternative de la première bande transporteuse (11) dans la première direction (X) comprennent un moteur (20) destiné à actionner un arbre d'entraînement (21) transportant au moins une roue dentée motrice (22), le moteur (20) et l'arbre d'entraînement (21), avec lesdites roues dentées motrices (22), étant supportées par un châssis mobile (23) sur lequel ladite première bande transporteuse (11) est montée, ladite au moins une roue dentée motrice (22) venant en prise avec une crémaillère (24) correspondante, ladite crémaillère (24) étant fixée à un châssis fixé (25), sur lequel le châssis mobile (23) se déplace au moyen de deux paires de roues (26) disposées pour glisser à l'intérieur des profils de guidage (27) longitudinaux correspondants reliés fermement au châssis fixé (25).

4. Système de chargement selon l'une ou plusieurs des revendications précédentes, **caractérisé en ce que** ladite deuxième bande transporteuse (15) est supportée par un châssis fixé (29).

5. Système de chargement selon l'une ou plusieurs des revendications précédentes, **caractérisé en ce que** ladite paroi de soutènement anti-chute mobile (16) est constituée d'une plaque métallique pivotée, selon un axe transversal à la deuxième direction (Y), vers deux supports opposés (30) reliés fermement audit châssis fixé (29) supportant ladite deuxième bande transporteuse (15).

6. Système de chargement selon l'une ou plusieurs des revendications précédentes, **caractérisé en ce que** lesdits moyens (18) pour le déplacement de la paroi de soutènement anti-chute mobile (16) comprennent un actionneur linéaire contraint, par sa première extrémité, à un support (32) fixé audit châssis fixé (29), et, au niveau de l'extrémité opposée, à une connexion (33) configurée pour agir sur la paroi de soutènement anti-chute mobile (16).

7. Système de chargement selon l'une ou plusieurs des revendications précédentes, **caractérisé en ce que** ladite connexion (33) comprend un premier levier (34), ledit premier levier (34) étant pivoté, au niveau d'une extrémité, à un support (35) fixé audit châssis fixé (29), centralement par rapport audit actionneur linéaire, et, au niveau de l'extrémité opposée, à une tige formée (36).

8. Système de chargement selon l'une ou plusieurs des revendications précédentes, **caractérisé en ce que** ladite tige formée (36) est contrainte de manière rotative, par sa première extrémité (37a), au premier levier (34) et, au niveau de la deuxième extrémité opposée (37b), à un deuxième levier (38), ledit deuxième levier (38) étant fixé à un pivot relié également fermement à la paroi de soutènement anti-chute mobile (16), ledit pivot étant articulé à un des deux supports (30).

9. Système de chargement selon l'une ou plusieurs des revendications précédentes, **caractérisé en ce que** lesdits moyens de déplacement (19) pour les articles à traiter, configurés pour passer en dessous de l'extrémité de déchargement (17) de la deuxième bande transporteuse (15), consistent en un transporteur de boîtes (43).

10. Four continu (50), du type comprenant au moins une chambre de chauffage (51) et des moyens de déplacement (19) pour des articles à traiter à l'intérieur de ladite au moins une chambre de chauffage, qui est **caractérisé en ce qu'**il comprend un système de chargement (10) selon l'une ou plusieurs des revendications précédentes.
